# EUROPÄISCHE PATENTANMELDUNG

(11) **EP 3 459 879 A1**
(43) Veröffentlichungstag der Anmeldung: **27.03.2019**
(21) Anmeldenummer: 17192066.3
(22) Anmeldetag: 20.09.2017
(51) Int. Cl.: B65G 1/04, B65G 1/137

(54) **ROBOTERBASIERTES LAGERSYSTEM**

(71) Anmelder: Swisslog Evomatic GMBH, 4621 Sipbachzell (AT)
(72) Erfinder: GARSTENAUER, Michael, 4040 Linz (AT)
(74) Vertreter: Mader, Joachim

(57) **Zusammenfassung**

Die vorliegende Erfindung betrifft ein Lagersystem aufweisend zumindest eine Rahmenstruktur (10, 11), welche eine Vielzahl von vertikalen Schächten zur Aufnahme von Lagerbehältern (21) definiert, zumindest eine Hebevorrichtung (20), die auf der Rahmenstruktur (10, 11) horizontal in einer Bewegungsebene beweglich eingerichtet ist, wobei die Hebevorrichtung (20) ferner eingerichtet ist zum Heben eines Lagerbehälters (21) aus einem der vertikalen Schächte und zum Befördern des Lagerbehälters (21) an eine Übergabeposition (12). Ferner umfasst das Lagersystem ein Transportsystem (40), eingerichtet zum Transportieren des Transportbehälters (22) zu und von einer Aufnahmeposition.

## Beschreibung

### 1. Technischer Bereich

Die vorliegende Erfindung betrifft ein Lagersystem als auch ein Verfahren zum Betreiben eines solchen Lagersystems.

### 2. Technischer Hintergrund

In einem Lager können Materialien eingelagert werden, und zur gewünschten Zeit aus dem Lager entnommen werden. Beispielsweise können Kleinteile in einem Artikel- oder Lagerbehälter in dem Lager gelagert werden. In jedem Lagerbehälter sind üblicherweise Artikel einer Art angeordnet. Bei der Entnahme werden häufig unterschiedliche Artikel zusammengestellt, und diese beispielsweise gemeinsam in einem einzigen Paket versendet. Dies kann im Rahmen einer Kommissionierung erfolgen.

Bei der Kommissionierung nach dem Ware-zur-Person Prinzip werden üblicherweise die einzelnen Lagerbehälter mit den Artikeln an eine entsprechende statische Station, bzw. den Kommissionierplatz gebracht. Hier werden daraufhin manuell durch einen Mitarbeiter ein oder mehrere Artikel aus dem Lagerbehälter entnommen, und in entsprechende Auftrags- oder Transportbehälter gelegt. Anschließend werden die Lagerbehälter zurück zum Lagerplatz in dem Lager gebracht.

Eine bekannte Lagerstruktur besteht aus Reihen von parallelen Regalen, in welchen die Behälter gelagert werden können. Aus den Fächern der Regale können die Behälter seitlich entnommen werden, und über ein entsprechendes Fördersystem transportiert werden.

In einer alternativen Anordnung umfasst ein Lager eine Rahmenstruktur, welche aus vertikalen Wänden besteht. Die vertikalen Wände sind dabei rechtwinklig zueinander angeordnet, sodass sie eine Matrix aus vertikalen, rechtwinkligen Schächten definieren. In diesen Schächten können die Behälter aufeinandergestapelt gelagert werden. Der Zugriff auf die Behälter erfolgt nur noch von oben. Dies stellt eine signifikante Platzersparnis gegenüber den Regalstrukturen dar, da Regalgassen nicht mehr vorgesehen sind. Zur Entnahme eines Artikels bzw. eines Artikelbehälters aus einem solchen vertikalen Schacht sind entsprechende Hebevorrichtungen bereitgestellt, welche sich auf der Rahmenstruktur autonom bewegen können. Diese Hebevorrichtungen können von oben die Artikelbehälter in den Schächten erreichen, und den obersten Artikelbehälter herausheben. Anschließend fahren diese Hebevorrichtungen zusammen mit dem entnommenen Behälter zu einem Entnahme- oder Ausgabeschacht am Rand der Rahmenstruktur und senken den Behälter auf Bodenhöhe, damit ein Mitarbeiter anschließend einen oder mehrere Artikel aus dem abgesenkten Artikelbehälter entnehmen kann. Durch das Absenken der Artikelbehälter bzw. das anschließende Anheben zurück zur Transportstellung geht viel Zeit verloren. Denn während dieser Zeit des Absenkens und Anhebens kann sich die Hebevorrichtung nicht wegbewegen, sodass sie blockiert ist. Um dennoch einen hohen Durchsatz zu erreichen, muss dieser Zeitverlust durch eine entsprechend höhere Anzahl von Hebevorrichtung kompensiert werden.

Auch stellt sich eine automatische Zu- bzw. Abführung von Auftragsbehältern zu und von dem Ausgabeschacht durch die Integration von entsprechenden Förderern als schwierig dar. Eine effiziente Hebevorrichtungsausnutzung bei gleichzeitig geeigneter Zugänglichkeit zu einer zu- und abfördernden Fördertechnik für Auftragsbehälter ist derzeit nicht verfügbar.

Die EP 1 037 828 B1 beschreibt ein Verfahren für die Organisation von Lagerplätzen und dem Güterfluss für ein Lager heterogener Einheiten. Die Behälter sind dabei in einem horizontal geschichteten und über- und hintereinander gestapelten Lager, das in einem vertikalen Rahmen verbunden ist, angeordnet, wodurch mehrere horizontale Koordinaten bildende Schichten von Behältern gebildet werden.

Das Dokument WO 2013/167907 A1 betrifft ein Lagersystem, wobei ein Robotersystem zum Handhaben von Behältern in einem Lager mit einem Raster von gestapelten Einheiten eingesetzt wird.

Es ist somit eine Aufgabe der vorliegenden Erfindung, ein Lagersystem bereitzustellen, mittels welchem die oben genannten Nachteile zumindest teilweise ausgeräumt werden. Es ist insbesondere eine Aufgabe der vorliegenden Erfindung, ein Lagersystem bereitzustellen, in welchem hochwertige Systemelemente bestmöglich bzw. hocheffizient ausgenutzt werden können. Wartezeiten sollen für diese hochwertigen Systemelemente weitestgehend minimiert werden. Ferner soll ein einfacher Weg der Integration des entsprechenden Materialflusses von Auftragsbehältern von und zu den Übergabepositionen erreicht werden.

Diese und weitere Aufgaben, die für den Fachmann aus der folgenden Beschreibung ersichtlich werden, werden durch den Gegenstand der unabhängigen Ansprüche gelöst.

### 3. Inhalt der Erfindung

Die vorliegende Erfindung betrifft ein Lagersystem. Das Lagersystem eignet sich dabei insbesondere zum Lagern und Kommissionieren von Artikeln. Das Lagersystem umfasst dabei zumindest eine Rahmenstruktur, welche eine Vielzahl von vertikalen Schächten zur Aufnahme von Lagerbehältern definiert. Die Rahmenstruktur kann dabei eine Vielzahl erster parallel zueinanderstehender Wände umfassen, welche rechtwinklig zu einer Vielzahl zweiter parallel zueinanderstehender Wände stehen, wobei sich die ersten und zweiten Wände regelmäßig kreuzen. Die Wände sind dabei vertikal aufgestellt. Durch die Wände und Schnittpunkte der Wände werden die vertikalen Schächte definiert, welche vorzugsweise rechtwinklig sind. Durch die Rahmenstruktur wird somit vorzugsweise eine Matrix von vertikalen Schächten definiert.

Die Lagerbehälter können zur Aufnahme eines oder mehrerer Artikel eingerichtet sein. Die Artikel können dabei in, an oder auf den Lagerbehältern bereitgestellt werden. Beispielsweise können in den Lagereinheiten Kleinteile oder auch größere Teile gelagert werden, wie etwa Schachteln, Flaschen oder Einzelteile. Vorzugsweise sind in jedem Lagerbehälter mehrere Artikel einer bestimmten Art gelagert.

Das Lagersystem umfasst weiterhin zumindest eine Hebevorrichtung, die auf der Rahmenstruktur horizontal in einer Bewegungsebene beweglich eingerichtet ist. Die Hebevorrichtung kann beispielsweise Räder oder andere Fortbewegungsmittel umfassen, mittels welchen sich die Hebevorrichtung auf der Rahmenstruktur bzw. auf den vertikalen Wänden der Rahmenstruktur horizontal bewegen kann, um verschiedene Schächte erreichen zu können. Die Ebene, auf welcher sich die Hebevorrichtungen bewegen, bzw. die Oberkante der Rahmenstrukturen kann dabei als Bewegungsebene bezeichnet werden. Die Hebevorrichtung ist dabei eingerichtet zum Heben eines Lagerbehälters aus einem der vertikalen Schächte und zum Befördern des Lagerbehälters an eine Übergabeposition. In der Übergabeposition kann dabei die Kommissionierung gemäß der Erfindung erfolgen. Die Übergabeposition ist vorzugsweise an einem Rand der Rahmenstruktur angeordnet. Vorzugsweise kann die Hebevorrichtung dabei mehr als einen Lagerbehälter aus einem oder mehreren Schächten heben und gleichzeitig befördern. Vorzugsweise kann die Hebevorrichtung einen Lagerbehälter auch von einer Übergabeposition zurück zu einem entsprechenden Schacht befördern, und den Lagerbehälter dort wieder absenken.

Die Wände haben daher vorzugsweise zwei Funktionen: Sie bilden die vertikalen Schächte für die Lagerbehälter, und bilden ferner die Verfahrwege für die Hebevorrichtungen. Darüber hinaus sind keine Anforderungen an die Wände gestellt. Somit müssen sie keine besonders tragende Struktur aufweisen. Die Wände müssen dabei insbesondere nicht als Wände in Form von Häuserwänden ausgestaltet sein. Sie müssen lediglich derart stabil sein, um die Hebevorrichtungen tragen zu können, die auf den Oberkanten der Wände fahren können.

Weiterhin umfasst das Lagersystem zumindest einen Manipulator, welcher eingerichtet ist zum Entnehmen eines Artikels aus dem Lagerbehälter in der Übergabeposition, und zum Übergeben des Artikels in einen Transportbehälter in einer Aufnahmeposition. Die Übergabeposition kann somit eine definierte Stelle im Lagersystem oder an der Rahmenstruktur sein, in welcher der Lagerbehälter zur Abgabe bzw. zur Übergabe eines Artikels durch die Hebevorrichtung bereitgestellt wird. Ebenso kann die Aufnahmeposition eine definierte Stelle im Lagersystem bzw. an der Rahmenstruktur sein, an welcher ein Transportbehälter zur Aufnahme eines Artikels vorgesehen ist. Vorzugsweise sind die Übergabe- und Aufnahmepositionen und auch die Manipulatoren an einem Rand der Rahmenstruktur angeordnet. Vorzugsweise sind die Übergabe- und Aufnahmepositionen derart nah zueinander angeordnet, dass der Manipulator beide alleine durch eine Umorientierung ohne Translation erreichen kann. Der Transportbehälter kann ähnlich wie der Lagerbehälter zur Aufnahme eines oder mehrerer Artikel einer oder verschiedener Art eingerichtet sein.

Das Lagersystem umfasst ferner ein Transportsystem, welches eingerichtet ist zum Transportieren des Transportbehälters zu und von der Aufnahmeposition. Das Transportsystem ist dabei vorzugsweise separat von der Hebevorrichtung eingerichtet, sodass vorzugsweise die Lagerbehälter und die Transportbehälter in separaten Systemen bewegt werden. Das Transportsystem und die Hebevorrichtung können somit relativ zueinander geschlossene Systeme darstellen.

Durch die Verwendung des Manipulators kann effizient ein Artikel aus dem Lagerbehälter bereits beim Lager bzw. bei der Rahmenstruktur entnommen werden, und in den entsprechenden Transportbehälter gegeben werden. Somit muss der Lagerbehälter über keine weiten Strecken bewegt werden, sondern nur kurz zur Entnahme eines Artikels bei der Übergabeposition abgestellt werden. Anschließend kann die Hebevorrichtung den Lagerbehälter wieder zurück zum entsprechenden Schacht transportieren und dort zur Lagerung absenken. Lediglich ein Transportbehälter muss relativ weite Strecken fahren, beispielsweise entlang verschiedener Aufnahmepositionen, um dort mit den gewünschten Artikeln befüllt zu werden.

Vorzugsweise ist die Übergabeposition im Wesentlichen auf Höhe der Bewegungsebene. Die Hebevorrichtung muss somit den Lagerbehälter nicht vollständig auf den Boden des Lagersystems absenken, was mit einer großen Zeitersparnis einhergeht. Vorzugsweise ist die Übergabeposition vertikal zur Bewegungsebene um weniger als 1 m versetzt, weiter vorzugsweise um weniger als 0,5 m, weiter vorzugsweise um weniger als 0,1 m, weiter vorzugsweise um weniger als 0,05 m, weiter vorzugsweise um weniger als 0,01 m und am meisten bevorzugt ist die Übergabeposition nicht vertikal zur Bewegungsebene versetzt. Die Hebevorrichtung kann den Lagerbehälter somit horizontal auf der Bewegungsebene zu der Übergabeposition befördern und dort ablegen, ohne dass das Ablegen des Lagerbehälters ein Absenken über weite Strecken bis z.B. auf Bodenhöhe erfordert. Gleiches gilt vorzugsweise auch für die Aufnahmeposition, sodass eine schnelle Kommissionierung erfolgen kann, mit einer effizienten Nutzung des Manipulators.

Vorzugsweise umfasst das Transportsystem eine erste Transportvorrichtung zum Transport der Transportbehälter auf einer ersten Ebene und eine zweite Transportvorrichtung zum Transport der Transportbehälter auf einer zweiten Ebene unterhalb der ersten Ebene. Die erste Ebene liegt dabei insbesondere vorzugsweise im Wesentlichen auf Höhe der Bewegungsebene, oder ist nur minimal zu dieser vertikal versetzt, wie oben beschrieben. Vorzugsweise liegt die erste Ebene auf gleicher Höhe wie die Übergabeposition. Mittels der zweiten Transportvorrichtung können somit die Transportbehälter beispielsweise entlang der Rahmenstruktur oder zu der Rahmenstruktur hin transportiert werden und an gewünschten Stellen an die erste Transportvorrichtung überführt werden, welche höher liegt, um anschließend mit den Artikeln befüllt zu werden. Damit wird vorteilhafterweise erreicht, dass nicht mittels der teuren Hebevorrichtungen zeitintensiv die Lagerbehälter zu den Transportbehältern abgesenkt werden müssen. Stattdessen werden die Transportbehälter auf Höhe der Hebevorrichtung zu diesen bzw. zu den Aufnahmepositionen beim Manipulator herantransportiert.

Insbesondere vorzugsweise umfasst das Transportsystem ferner eine Liftvorrichtung, welche eingerichtet ist zum Heben eines Transportbehälters von der ersten Ebene zur zweiten Ebene und zurück. Dies ermöglicht einen überwiegend unabhängigen Einsatz der zwei Transportvorrichtungen, da die zweite Transportvorrichtung stetig weiter betrieben werden kann, selbst wenn in der ersten Transportvorrichtung ein Transportbehälter beladen wird. Durch Ausschleusen und Überführen eines Transportbehälters von der ersten Transportvorrichtung an die Liftvorrichtung, und zurück, kann das System dynamisch und flexibel betrieben werden.

Vorzugsweise kann das Transportsystem auch mit einer Transportvorrichtung auf einer unteren Ebene und einer Liftvorrichtung ausgestattet sein, wobei die Liftvorrichtung einzelne Transportbehälter von der unteren Ebene zur Übergabeposition hebt und nach Befüllen durch den Manipulator den Transportbehälter wieder zu der Transportvorrichtung auf der unteren Ebene absenkt. Der Einsatz einer weiteren Transportvorrichtung auf der Höhe der Übergabeposition ist dabei nicht erforderlich. Alleine die Liftvorrichtung befördert den Transportbehälter letztendlich zur Übergabeposition und zurück zur Transportvorrichtung auf der unteren Ebene.

Vorzugsweise umfasst das Lagersystem zumindest zwei Rahmenstrukturen, welche jeweils eine Vielzahl von vertikalen Schächten zur Aufnahme von Lagerbehältern definieren, wobei der Manipulator in einer Gasse zwischen den zwei Rahmenstrukturen angeordnet ist. Somit können die Manipulatoren sehr effizient eingesetzt werden, da sie durch Hebevorrichtung von beiden angrenzenden Rahmenstrukturen beliefert werden können, bzw. Artikel aus den Lagerbehältern, die durch die Hebevorrichtungen beider Rahmenstrukturen bereitgestellt werden, entnehmen können. Insbesondere vorzugsweise umfasst das Lagersystem einen Übergang zwischen den zwei Rahmenstrukturen. Dadurch können beispielsweise Hebevorrichtungen sich von einer Rahmenstruktur zu einer benachbarten über die Gasse hinwegbewegen, um eine Wartungspositionen zu erreichen. Der Fachmann versteht, dass eine Vielzahl von Rahmenstrukturen vorgesehen sein kann, und dass in einer, mehreren oder in jeder Gasse zwischen den Rahmenstrukturen ein oder mehrere Manipulatoren eingerichtet sein können. Vorzugsweise ist dabei einer, mehreren oder jeder Gasse ein Transportsystem zugeordnet. Somit kann ein effektiver Transport gewährleistet werden.

Vorzugsweise ist der Manipulator an einer Linearachse beweglich eingerichtet. Dadurch ist es möglich, dass der Manipulator flexibel beweglich ist und beispielsweise auch verschiedene Übergabepositionen oder verschiedene Aufnahmepositionen erreichen kann. Insbesondere vorzugsweise ist die Linearachse parallel zur Rahmenstruktur ausgerichtet.

Vorzugsweise sind dem bzw. jedem Manipulator zwei oder mehr Übergabepositionen zugeordnet. Dadurch können die Hebevorrichtungen verschiedene Lagerbehälter an den Übergabepositionen bereitstellen, und der Manipulator kann zum passenden Zeitpunkt Artikel aus diesen Lagerbehältern entnehmen, wenn der entsprechende Transportbehälter die Aufnahmeposition erreicht hat. Dadurch werden Wartezeiten des Manipulators vermieden, da eine Vielzahl von Lagerbehältern zur Artikelentnehme gleichzeitig bereitstehen können. Außerdem werden auch die Hebevorrichtungen effizient verwendet, da sie gleich nach der Abgabe eines Lagerbehälters einen bereits verwendeten anderen Lagerbehälter von der Übergabeposition zurück die entsprechende Lagerposition bzw. den entsprechenden Schacht in der Rahmenstruktur bringen können.

Vorzugsweise umfasst das Lagersystem mehrere Manipulatoren, wobei jedem Manipulator zumindest eine Übergabeposition und zumindest eine Aufnahmeposition zugeordnet ist. Dies ermöglicht ein effizientes und großflächiges Betreiben des Lagersystems. Insbesondere vorzugsweise verbindet das Transportsystem dabei die verschiedenen Aufnahmepositionen, sodass ein Transportbehälter beispielsweise zu jeder Aufnahmeposition transportiert werden kann, um dort mittels der Manipulatoren nach und nach befüllt zu werden. Vorzugsweise werden auch mehrere Hebevorrichtungen eingesetzt.

Vorzugsweise umfasst das Lagersystem einen Transportbehälterpuffer bei der Aufnahmeposition. Dies ermöglicht eine zeitliche Entkopplung des Transports und der Artikelübergabe durch den Manipulator. In diesen Pufferpositionen können die entsprechenden Behälter warten bis das entsprechende Gegenstück bereitgestellt ist. Dadurch wird ein Behälterstau und eine Blockierung der Aufnahmeposition verhindert.

Vorzugsweise umfasst das Lagersystem ein Sensorsystem zum Erkennen eines Lagerbehälters in der Übergabeposition. Damit kann genau überprüft werden, ob der korrekte Lagerbehälter bereitsteht, sodass Fehler minimiert werden.

Vorzugsweise ist der Manipulator als mehrachsiger Gelenkarmroboter ausgestaltet. Manipulatoren, und insbesondere Roboter sind frei programmierbare und vielseitig einsetzbare Handhabungsmaschinen. Mittels entsprechender Steuerungen und Aktoren können die Manipulatoren verschiedene Konfigurationen im Raum einnehmen und einen Endeffektor zu gewünschten Positionen im Raum bewegen. Als Endeffektor des Manipulators bzw. Roboters wird vorzugsweise ein Greifer verwendet, welcher einen Artikel durch Kraftschluss, mittels Magnet- und/oder Saugkraft o.ä. greifen kann.

Die vorliegende Erfindung betrifft weiterhin die Verwendung eines oben beschriebenen Lagersystems zur Kommissionierung. Ferner betrifft die Erfindung ein Verfahren zum Betreiben eines oben beschriebenen Lagersystems. Das Verfahren umfasst dabei die folgenden Schritte:

Bewegen der Hebevorrichtung auf der Rahmenstruktur zu einem der vertikalen Schächte; Heben, mittels der Hebevorrichtung, eines Lagerbehälters aus dem vertikalen Schacht; Bewegen der Hebevorrichtung mit dem Lagerbehälter zu der Übergabeposition; Transportieren, mittels des Transportsystems, eines Transportbehälters zu der Aufnahmeposition; Entnehmen, mittels des Manipulators, eines Artikels aus dem Lagerbehälter an der Übergabeposition; Übergeben, mittels des Manipulators, des Artikels in den Transportbehälter in der Aufnahmeposition; und Transportieren, mittels des Transportsystems, des Transportbehälters von der Aufnahmeposition.

Das Verfahren muss dabei nicht notwendigerweise in der angebenden Reihenfolge ablaufen. Beispielsweise kann der Transportbehälter zu der Aufnahmeposition transportiert werden, bevor ein Lagerbehälter aus dem vertikalen Schacht gehoben wurde oder bevor dieser zur Übergabeposition bewegt wurde. Vorzugsweise erfolgt die Beförderung der Lagerbehälter zu der Übergabeposition derart, dass es zu keinen Wartezeiten des Manipulators kommt, und der Manipulator unmittelbar mit der Entnahme des Artikels beginnen kann. Der Prozess kann für mehrere Aufträge gleichzeitig erfolgen, so dass ein hoher Durchsatz erreicht wird.

Das erfindungsgemäße Lagersystem ist vorzugsweise mit einer entsprechenden Steuerung ausgestattet, welche zentral oder dezentral implementiert sein kann und vorzugsweise die Hebevorrichtung, den Manipulator und das Transportsystem steuert. Die Steuerung kann dabei mit einer Datenbank verbunden oder verknüpft sein, in welcher die Lagerplätze der einzelnen Lagerbehälter in der Rahmenstruktur hinterlegt sind. Die Erfindung betrifft dabei auch ein Computerprogramm mit Instruktionen zum Durchführen der oben genannten Funktionen und Verfahrensschritte, wenn auf einem entsprechenden Computer ausgeführt.

### 4. Beschreibung bevorzugter Ausführungsformen

Im Folgenden wird die vorliegende Erfindung unter Bezugnahme auf die beiliegenden Figuren näher beschrieben. Dabei sind gleiche Elemente mit gleichen Bezugszeichen gekennzeichnet. Es zeigt:
- Figur 1: ein Lagersystem gemäß einer Ausführungsform der vorliegenden Erfindung;
- Figur 2: einen Teil des Lagersystems der Figur 1 aus einer anderen Perspektive;
- Figur 3: einen Ausschnitt des Lagersystems der Figur 1 von oben; und
- Figur 4: einen Ausschnitt des Lagersystems der Figur 1 von der Seite.

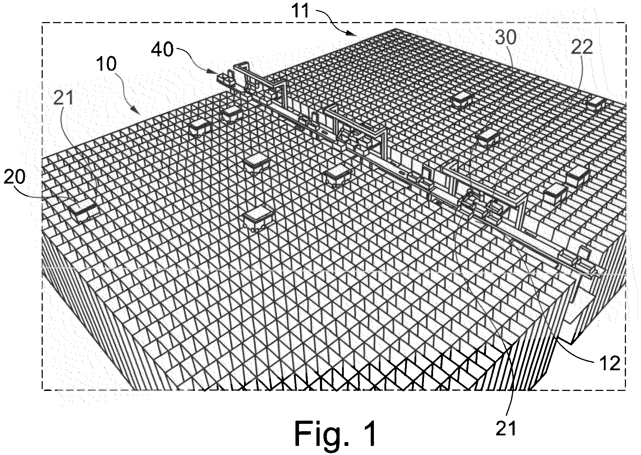

In der Figur 1 ist ein Lagersystem dargestellt, welches zwei Rahmenstrukturen 10, 11 umfasst. Jede Rahmenstruktur 10, 11 umfasst dabei vertikale Schächte, welche matrixartig angeordnet sind. Jede Rahmenstruktur 10, 11 besteht dabei aus einer Vielzahl von ersten Wänden und rechtwinklig quer dazu verlaufenden zweiten Wänden, wobei sich die Wände regelmäßig kreuzen. Damit werden durch die Wände die Schächte zur Aufnahme von Lagerbehältern 21 definiert. Zwischen den beiden Rahmenstrukturen 10, 11 ist eine Gasse angeordnet, in welcher ein Transportsystem 40 Transportbehälter 22 entlang der Gasse transportiert.

Auf den einzelnen Rahmenstrukturen 10, 11 ist eine Vielzahl von Hebevorrichtungen 20 bereitgestellt. Diese können sich auf den Oberseiten der Wände der Rahmenstruktur 10, 11 autonom und unabhängig voneinander horizontal bewegen, und dabei die einzelnen Schächte anfahren. In den Schächten sind Lagerbehälter 21 gelagert, wobei einzelne oder mehrere solcher Lagerbehälter übereinander gestapelt sein können. Die Hebevorrichtungen 20 können eine oder mehrere der Lagerbehälter 21 aus einem der vertikalen Schächte entnehmen bzw. herausheben, und die entnommenen Lagerbehälter 21 anschließend über die Rahmenstrukturen 10, 11 hinweg horizontal bewegen. Die Ebene, auf welcher sich die Hebevorrichtungen 20 bewegen, bzw. die Oberkanten der Rahmenstrukturen 10, 11, können dabei im Rahmen der Erfindung als die Bewegungsebene bezeichnet werden.

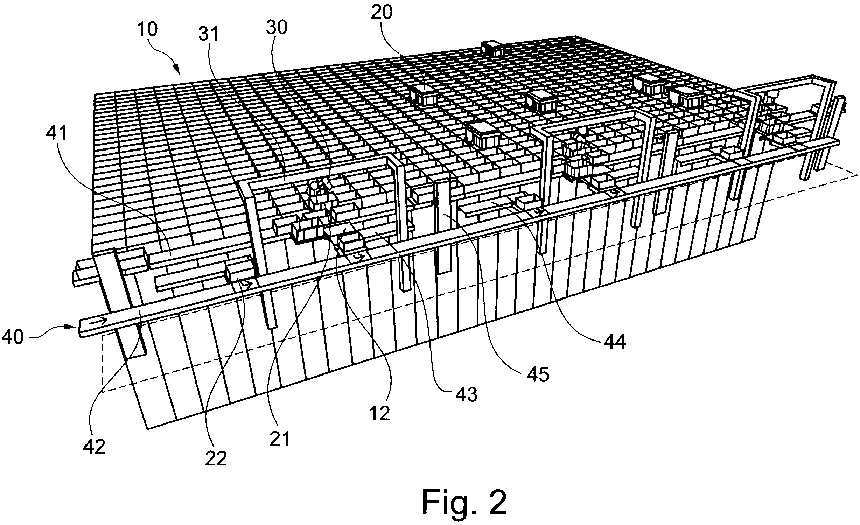

Die Figur 2 zeigt eine detailliertere Ansicht eines Ausschnitts der Ausführungsform von Figur 1. Wie in Figur 2 zu erkennen, können die Hebevorrichtungen 20 die Lagerbehälter 21 zu entsprechenden Übergabepositionen 12 an dem Transportsystem 40 bewegen. Die Übergabepositionen 12 sind als Plattformen ausgestaltet, auf welche die Lagerbehälter 21 durch die Hebevorrichtungen 20 abgestellt werden. Die Übergabepositionen 12 sind dabei im Wesentlichen auf Höhe der Bewegungsebene und am Rand der Rahmen 10, 11 angeordnet.

Ferner sind Manipulatoren 30 bereitgestellt, welche auf die Lagerbehälter 21 in den Übergabepositionen 12 zugreifen können. Dabei können sie etwa einzelne Artikel aus den Lagerbehältern 21 entnehmen, oder die Lagerbehälter 21 mit Artikeln befüllen. Die Übergabepositionen 12 sind dabei derart angeordnet, dass sie in Reichweite der Manipulatoren 30 sind.

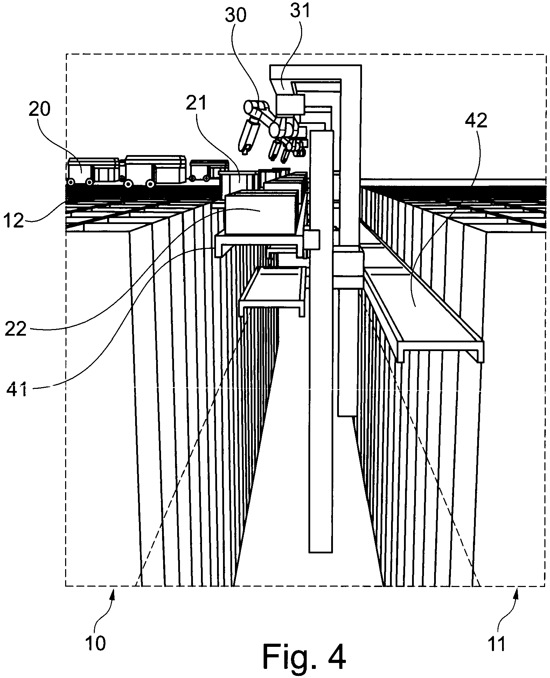

Wie in Figur 2 ersichtlich, umfasst das Transportsystem 40 zwei Transportvorrichtungen 41, 42. Die zweite Transportvorrichtung 42 ist eingerichtet, um die Transportbehälter 22 entlang der Gasse zu transportieren, auf einer relativ niedrigen Ebene unterhalb der ersten Transportvorrichtung 41. Durch Ausschleusen der Transportbehälter in entsprechende erste Seitenarme 43 können die Transportbehälter 22 den Liften 45 übergeben werden. Diese Lifte 45 können die Transportbehälter 22 auf die erste Transportvorrichtung 41 anheben, wo diese dann zu entsprechenden Aufnahmepositionen bewegt werden, um dort mit Artikeln beladen zu werden. Anschließend können die Transportbehälter 22 wieder mittels der Lifte 45 abgesenkt werden, und über entsprechende zweite Seitenarme 44 zurück zur zweiten Transportvorrichtung 42 geschleust werden. Durch die Anordnung der Lifte 45 zwischen zwei Manipulatoren 30 bzw. zwischen zwei Aufnahmepositionen können die Lifte sowohl die Rückführung der Transportbehälter 22 von der vorangegangenen Aufnahmeposition zurück zur zweiten Transportvorrichtung 42 durchführen, aber auch eine Zuführung von Transportbehältern 22 von der zweiten Transportvorrichtung 42 zu der folgenden Aufnahmeposition. Der vertikale Versatz der ersten und zweiten Transportvorrichtungen 42, 42 ist auch in Figur 4 ersichtlich.

Die Manipulatoren 30, die Aufnahmepositionen und die Übergabepositionen 12 sind am Rand der Rahmen 10, 11 angeordnet, sodass ein Manipulator 30 einerseits einfach die entsprechenden Aufnahmepositionen und Übergabepositionen 12 erreichen kann, und eine einfache Zu- und Abführung der Transportbehälter 22 ermöglicht wird. Im Betrieb kann mittels einer Hebevorrichtung 20 ein Lagerbehälter 21 gemäß eines Auftrags zu einer Übergabeposition 12 bewegt, und dort abgestellt werden. Der Manipulator 30 entnimmt einen oder mehrere Artikel aus dem Lagerbehälter 21. Danach kann der Lagerbehälter durch die Hebevorrichtung 20 wieder zum entsprechenden Schacht in der Rahmenstruktur 10, 11 zurückbewegt werden. Derweil wurde ein Transportbehälter 22 über das Transportsystem 40 zu dem Manipulator 30 in die Aufnahmeposition herangeführt. Der Manipulator 30 kann nun den entnommenen Artikel in den Transportbehälter 22 ablegen, welcher daraufhin mittels des Transportsystem 40 wegtransportiert wird.

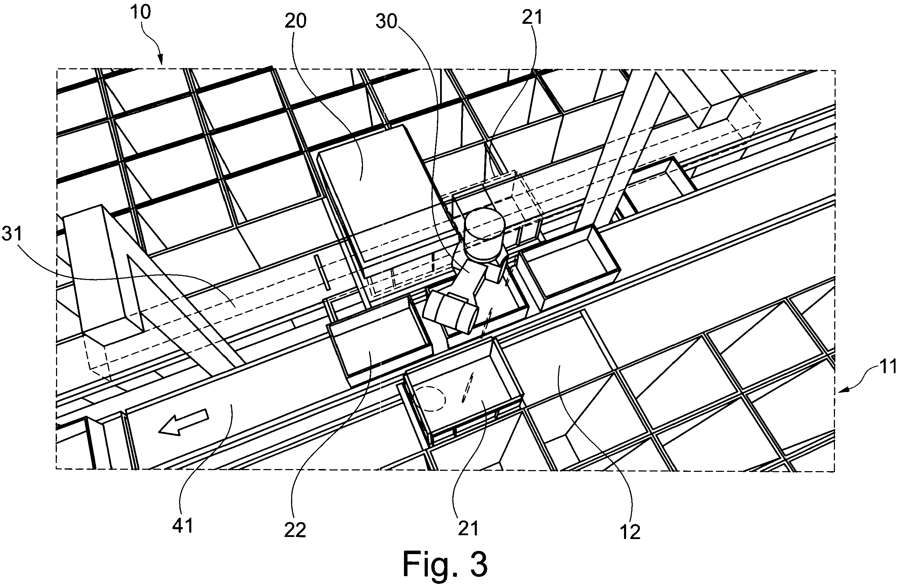

Figur 3 zeigt eine detaillierte Ansicht des Arbeitsbereichs eines Manipulators 30 gemäß der Ausführungsform der Figur 1. Wie in Figur 3 ersichtlich, kann jeder Manipulator 30 auf die Lagerbehälter 21 in entsprechenden Übergabepositionen 12 beider Rahmenstrukturen 10, 11 zugreifen. Die Aufnahmeposition bzw. die erste Transportvorrichtung 41 liegt dabei zwischen den Übergabepositionen 12 der beiden Rahmenstrukturen 10, 11. Durch diese symmetrische Anordnung kann der Manipulator 30 somit effizient eingesetzt werden.

Wie ferner aus Figur 3 ersichtlich, ist der Manipulator 30 an einer Linearachse 31 befestigt, sodass der Manipulator 30 sich zumindest teilweise entlang der Gasse zwischen den beiden Rahmenstrukturen 10, 11 bewegen kann. Die Linearachse 31 ist parallel zur Rahmenstruktur 10, 11 und insbesondere parallel zur Bewegungsebene eingerichtet. Hierdurch ist es möglich, dass der Manipulator 30 mehrere Transportbehälter 22 erreichen kann, die in entsprechenden Aufnahmepositionen bei dem Manipulator 30 bereitstehen. Eine Aufnahmeposition kann dabei derart dimensioniert sein, dass mehrere Transportbehälter 22 in dieser vorliegen können. Gleiches gilt für die Übergabeposition 12. Mittels der Anordnung an der Linearachse 31 kann eine größere Anzahl von Lagerbehältern mittels des Manipulators 30 erreicht werden, wodurch eine bessere Entkopplung des Lager- und Transportsystems erreicht wird. Dies resultiert in geringen Wartezeiten und einer hohen Effizienz. In einer alternativen Ausführungsform kann der Manipulator auch stationär angeordnet sein, was eine kostengünstige Variante darstellt.

In Figur 4 ist verdeutlicht dargestellt, dass die Transportbehälter 21 in den Übergabepositionen 12 im Wesentlichen auf Höhe der Bewegungsebene der Hebevorrichtungen 20 bereitgestellt sind. Da die Lagerbehälter 21 durch die Hebevorrichtungen 20 im Wesentlichen auf Höhe dieser Bewegungsebene abgestellt werden, und die Manipulatoren direkt auf diese Lagerbehälter 21 in den Übergabepositionen 12 zugreifen können, kann das Lagersystem sehr effizient ohne großen Zeitverlust betrieben werden.

Vorzugsweise ist das Lagersystem in einem System zur Lagerung implementiert. Ein solches System kann ein automatisches Kleinteilelagersystem zur effizienten Kommissionierung und Lagerung von Einzelstücken und Kleinteilen sein. Es ermöglicht eine bessere Ausnutzung der verfügbaren Lagerflächen und bietet höhere Effizienz an integrierten Ware-zur-Person-Arbeitsplätzen.

### Bezugszeichenliste

10, 11 Rahmenstruktur
12 Übergabeposition
20 Hebevorrichtung
21 Lagerbehälter
22 Transportbehälter
30 Manipulator
31 Linearachse
40 Transportsystem
41 erste Transportvorrichtung
42 zweite Transportvorrichtung
43, 44 Seitenarme
45 Lift

## Patentansprüche

1. Lagersystem, aufweisend:
zumindest eine Rahmenstruktur (10, 11), welche eine Vielzahl von vertikalen Schächten zur Aufnahme von Lagerbehältern (21) definiert;
zumindest eine Hebevorrichtung (20), die auf der Rahmenstruktur (10, 11) horizontal in einer Bewegungsebene beweglich eingerichtet ist, wobei die Hebevorrichtung (20) ferner eingerichtet ist zum Heben eines Lagerbehälters (21) aus einem der vertikalen Schächte und zum Befördern des Lagerbehälters (21) an eine Übergabeposition (12);
zumindest einen Manipulator (30) eingerichtet zum Entnehmen eines Artikels aus dem Lagerbehälter (21) in der Übergabeposition (12) und zum Übergeben des Artikels in einen Transportbehälter (22) in einer Aufnahmeposition;
ein Transportsystem (40), eingerichtet zum Transportieren des Transportbehälters (22) zu und von der Aufnahmeposition.

2. Lagersystem nach Anspruch 1, wobei die Übergabeposition (12) im Wesentlichen auf Höhe der Bewegungsebene ist, oder wobei die Übergabeposition (12) vertikal zur Bewegungsebene um weniger als 1 m versetzt ist, vorzugsweise um weniger als 0,5 m, weiter vorzugsweise um weniger als 0,1 m, weiter vorzugsweise um weniger als 0,05 m, weiter vorzugsweise um weniger als 0,01 m, und wobei die Übergabeposition (12) am meisten bevorzugt nicht vertikal zur Bewegungsebene versetzt ist.

3. Lagersystem nach Anspruch 1 oder 2, wobei das Transportsystem (40) eine erste Transportvorrichtung (41) zum Transport der Transportbehälter (22) auf einer ersten Ebene und eine zweite Transportvorrichtung (42) zum Transport der Transportbehälter (22) auf einer zweiten Ebene unterhalb der ersten Ebene umfasst, wobei die erste Ebene vorzugsweise im Wesentlichen auf Höhe der Bewegungsebene liegt.

4. Lagersystem nach Anspruch 3, wobei das Transportsystem (40) ferner eine Liftvorrichtung (45) umfasst, eingerichtet zum Heben eines Transportbehälters (22) von der ersten Ebene zur zweiten Ebene und zurück.

5. Lagersystem nach einem der Ansprüche 1 bis 4, aufweisend zumindest zwei Rahmenstrukturen (10, 11), welche jeweils eine Vielzahl von vertikalen Schächten zur Aufnahme von Lagerbehältern (21) definieren, wobei der Manipulator (30) in einer Gasse zwischen den zwei Rahmenstrukturen (10, 11) angeordnet ist.

6. Lagersystem nach Anspruch 5, weiter aufweisend einen Übergang zwischen den zwei Rahmenstrukturen (10, 11).

7. Lagersystem nach einem der Ansprüche 1 bis 6, wobei der Manipulator (30) an einer Linearachse (31) beweglich eingerichtet ist.

8. Lagersystem nach Anspruch 7, wobei die Linearachse (31) parallel zur Rahmenstruktur (10, 11) und insbesondere parallel zur Bewegungsebene ausgerichtet ist.

9. Lagersystem nach einem der Ansprüche 1 bis 8, wobei dem Manipulator (30) zwei oder mehr Übergabepositionen (12) zugeordnet sind.

10. Lagersystem nach einem der Ansprüche 1 bis 9, aufweisend mehrere Manipulatoren (30), wobei jedem Manipulator (30) zumindest eine Übergabeposition (12) und zumindest eine Aufnahmeposition zugeordnet ist.

11. Lagersystem nach Anspruch 10, wobei das Transportsystem (40) die Aufnahmepositionen verbindet.

12. Lagersystem nach einem der Ansprüche 1 bis 11, aufweisend einen Transportbehälterpuffer bei der Aufnahmeposition.

13. Lagersystem nach einem der Ansprüche 1 bis 12, aufweisend ein Sensorsystem zum Erkennen eines Lagerbehälters (21) an der Übergabeposition.

14. Lagersystem nach einem der Ansprüche 1 bis 13, wobei der Manipulator (30) ein mehrachsiger Gelenkarmroboter ist.

15. Verfahren zum Betreiben eines Lagersystems nach einem der Ansprüche 1 bis 14, aufweisend:
Bewegen der Hebevorrichtung (20) auf der Rahmenstruktur (10, 11) zu einem der vertikalen Schächte;
Heben, mittels der Hebevorrichtung (20), eines Lagerbehälters (21) aus dem vertikalen Schacht;
Bewegen der Hebevorrichtung (20) mit dem Lagerbehälter (21) zu der Übergabeposition (12);
Transportieren, mittels des Transportsystems (40), eines Transportbehälters (22) zu der Aufnahmeposition;
Entnehmen, mittels des Manipulators (30), eines Artikels aus dem Lagerbehälter (21) an der Übergabeposition (12);
Übergeben, mittels des Manipulators (30), des Artikels in den Transportbehälter (22) in der Aufnahmeposition;
Transportieren, mittels des Transportsystems (40), des Transportbehälters (22) von der Aufnahmeposition.
